# EUROPÄISCHE PATENTANMELDUNG

(11) **EP 4 215 953 A1**
(43) Veröffentlichungstag der Anmeldung: **26.07.2023**
(21) Anmeldenummer: 22152803.7
(22) Anmeldetag: 21.01.2022
(51) Int. Cl.: G01V 8/12, G01V 8/14, G01V 8/20

(54) **OPTISCHER SENSOR**

(71) Anmelder: Leuze electronic GmbH + Co. KG, 73277 Owen/Teck (DE)
(72) Erfinder: Feller, Bernhard, 86316 Friedberg (DE); Aldiek, Norbert, 73230 Kirchheim/Teck (DE); Tassy, Sven, 73230 Kirchheim unter Teck (DE); Wendel, Simon, 73230 Kirchheim unter Teck (DE); Bortz, Jörg, 72805 Lichtenstein (DE)
(74) Vertreter: Ruckh, Rainer Gerhard

(57) **Zusammenfassung**

Die Erfindung betrifft einen optischen Sensor zur Erfassung von Objekten in einem Überwachungsbereich, mit wenigstens einen eine optische Achse (12) aufweisenden Lichtstrahlen (3) emittierenden Sender (4) und mit wenigstens einen eine optische Achse (12) aufweisenden Empfänger (6), welcher zum Empfang von Lichtstrahlen (3) ausgebildet ist. Dem Sender (4) und dem Empfänger (6) ist jeweils eine Blendenanordnung (10) zugeordnet, welche wenigstens zwei entlang der optischen Achse (12) angeordnete Blenden (13, 15, 17) mit unterschiedlichen Innen- und Außendurchmessern aufweist. An wenigstens einer Blende (13, 15, 17) ist ein an deren äußeren Rand umlaufendes Tubuslement vorgesehen.

## Beschreibung

Die Erfindung betrifft einen optischen Sensor.

Derartige optische Sensoren werden generell zur Erfassung von Objekten in einem Überwachungsbereich eingesetzt.

In der einfachsten Ausführungsform weist der optische Sensor nur einen Lichtstrahlen emittierenden Sender und einen Lichtstrahlen empfangenden Empfänger auf. Der optische Sensor kann dabei als Lichttaster, Distanzsensor, Reflexionslichtschranke und dergleichen ausgebildet sein, wobei bei diesen Ausführungsformen der Sender und der Empfänger in einem gemeinsamen Gehäuse integriert sind. Weiterhin kann der optische Sensor auch als Lichtschranke ausgebildet sein. In diesem Fall sind der Sender und Empfänger in separaten Gehäusen untergebracht.

Generell kann der optische Sensor auch mehrere Sender und/oder Empfänger aufweisen. Ein Beispiel für einen derartigen optischen Sensor ist ein Lichtvorhang.

Der Lichtvorhang umfasst typischerweise in einem ersten Gehäuse an einem Rand des Überwachungsbereichs eine Reihenanordnung von Lichtstrahlen emittierenden Sendern und in einem zweiten Gehäuse an dem gegenüberliegenden Rand des Überwachungsbereichs eine Reihenanordnung von Lichtstrahlen empfangenden Empfängern.

Der optische Sensor weist eine Auswerteeinheit auf, in welcher in Abhängigkeit von Empfangssignalen des oder der Empfänger ein Objektfeststellungssignal generiert wird. Dieses Objektfeststellungssignal kann insbesondere als binäres Schaltsignal ausgebildet sein, dessen Schaltzustände angeben, ob sich ein Objekt im Überwachungsbereich befindet oder nicht. Das Objektfeststellungssignal kann alternativ ein analoges Signal, beispielsweise ein Distanzwert sein.

Um eine sichere Objektdetektion zu gewährleisten, ist jedem Sender sowie jedem Empfänger eine Optikeinheit zugeordnet, die insbesondere Optikelemente wie zum Beispiel Linsen aufweist. Mit diesen Optikeinheiten erfolgt eine sendeseitige Strahlformung der Lichtstrahlen und empfangsseitig eine Fokussierung der Lichtstrahlen auf den jeweiligen Empfänger.

Trotz des Einsatzes derartiger Optikeinheiten besteht ein häufiges Problem bei derartigen optischen Sensoren darin, dass die Lichtstrahlen nicht genau entlang der optischen Achse des Senders emittiert werden, sondern dass zusätzlich Nebenkeulen im Strahlprofil der Lichtstrahlen vorhanden sind. Weiterhin entstehen Nebenkeulen durch parasitäre Reflexionen von Teilen der Lichtstrahlen innerhalb des jeweiligen Gehäuses des optischen Sensors. Dies kann zu Beeinträchtigungen der Objektdetektionen führen, das heißt die Nachweissicherheit bei den Objektdetektionen ist reduziert.

Ein weiterer Nachteil besteht darin, dass bekannte Optikeinheiten konstruktiv aufwändig sind.

Der Erfindung liegt die Aufgabe zugrunde einen optischen Sensor der eingangs genannten Art bereitzustellen, bei welchem mit geringem konstruktiven Aufwand die Nachweissicherheit erhöht ist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft einen optischen Sensor zur Erfassung von Objekten in einem Überwachungsbereich, mit wenigstens einen eine optische Achse aufweisenden, Lichtstrahlen emittierenden Sender und mit wenigstens einen eine optische Achse aufweisenden Empfänger, welcher zum Empfang von Lichtstrahlen ausgebildet ist. Dem Sender und dem Empfänger ist jeweils eine Blendenanordnung zugeordnet, welche wenigstens zwei entlang der optischen Achse angeordnete Blenden mit unterschiedlichen Innen- und Außendurchmessern aufweist. An wenigstens einer Blende ist ein an deren äußeren Rand umlaufendes Tubuselement vorgesehen.

Der erfindungsgemäße optische Sensor kann generell nur einen Sender und nur einen Empfänger aufweisen, wobei dann der optische Sensor als Lichtschranke, Reflexionslichtschranke, Lichttaster, Distanzsensor oder dergleichen ausgebildet sein kann. Der optische Sensor kann auch eine Mehrfachanordnung von Sendern und/oder Empfängern aufweisen. Insbesondere kann der optische Sensor als Lichtvorhang ausgebildet sein.

Die Funktionsweise des optischen Sensors ist generell derart, dass der optische Sensor eine Auswerteeinheit aufweist, in der abhängig von Empfangssignalen des oder der Empfänger ein Objektfeststellungssignal generiert, welches angibt, ob ein Objekt im Überwachungsbereich vorhanden ist.

Der optische Sensor kann generell als Sicherheitssensor ausgebildet sein. Für den Einsatz im Bereich der Sicherheitstechnik weist dieser einen fehlersicheren Aufbau auf, was beispielsweise durch eine zweikanalige Auswerteeinheit realisiert wird.

Erfindungsgemäß ist jedem Sender und Empfänger eine Blendenanordnung zugeordnet. Diese umfasst wenigstens zwei in der optischen Achse des Senders oder Empfängers hintereinander angeordnete Blenden. Dabei weisen die Blenden unterschiedliche Innen- und Außendurchmesser auf, so dass mit den Blenden unterschiedliche Blendenwirkungen erhalten werden. Durch die Mehranordnung der Blenden wird eine definierte Strahlführung der Lichtstrahlen gewährleistet. Die senderseitige Blendenanordnung und die empfangsseitige Blendenanordnung können identisch ausgebildet sein, was jedoch nicht zwingend ist.

Als wesentliches Element der Erfindung ist an wenigstens einer Blende, besonders vorteilhaft an mehreren Blenden, ein Tubuselement vorgesehen. Das oder jedes Tubuselement ist am äußeren Rand der jeweiligen Blende umlaufend angeordnet. Das Tubuselement reflektiert insbesondere Nebenkeulen der Lichtstrahlen kontrolliert in durch die Geometrie des Tubuselement vorgegebenen Richtungen. Dadurch ist eine kontrollierte Strahlführung derartiger parasitärer Anteile der Lichtstrahlen gewährleistet, wodurch verhindert wird, dass diese parasitären Anteile der Lichtstrahlen insbesondere von stark reflektierenden Elementen im Innenraum des Gehäuses aus dem Sender oder in den Empfänger reflektiert werden, was zu Beeinträchtigungen der Objektdetektionen durch parasitäre Anteile mit unerwünschten Nebenkeulen im Strahldiagramm führen würde.

Damit wird die Funktionssicherheit, insbesondere die Nachweissicherheit des optischen Sensors signifikant erhöht.

Die Blendenanordnungen weisen zudem einen kompakten, einfachen Aufbau auf, sodass diese mit einem geringen konstruktiven Aufwand hergestellt werden können.

Besonders vorteilhaft ist das oder jedes Tubuselement an der dem Sender oder Empfänger zugewandten Seite der jeweiligen Blende vorgesehen.

Damit kann besonders effizient verhindert werden, dass Lichtstrahlen durch interne ungewollte Reflexe vom Sender schräg abgestrahlt werden oder durch ebensolche Reflexe schräg auf die Empfangsseite einfallendes Licht auf den Empfänger gelangt.

Weiter vorteilhaft umläuft jedes Tubuselement entlang des gesamten Umfangs der jeweiligen Blende.

Dadurch bildet das Tubuslement eine geschlossene Fläche, so dass gewährleistet ist, dass keine Lichtstrahlen seitlich am Tubuselement ein - oder austreten können.

Besonders zweckmäßig verläuft jedes Tubuselement in einem konstanten Neigungswinkel zu einer Blendenebene der Blende.

Damit wird in Umfangsrichtung der Blende eine gleichförmige Abschirmwirkung des Tubuslements erhalten.

Vorteilhaft verläuft das Tubuslement etwa in einem rechten Winkel zur Blendenebene der Blende. Gemäß einer zweckmäßigen Auslegung beträgt der Neigungswinkel wenigstens 85°, besonders vorteilhaft wenigstens 90°.

Gemäß einer konstruktiv vorteilhaften Ausgestaltung weist die dem Sender oder Empfänger nächstliegende Blende den kleinsten Innen- und Außendurchmesser auf. Die Innen- und Außendurchmesser der folgenden Blenden sind jeweils größer als der Innen- und Außendurchmesser der benachbarten, näher zum Sender oder Empfänger liegenden Blende.

Somit verbreitern sich ausgehend vom Sender oder Empfänger die Blenden und ihre Blendenöffnungen, wobei die Blenden eine konusförmige Anordnung bilden. Entsprechendes gilt für die an den Blenden vorgesehenen Tubuselemente.

Da auch die Durchmesser die Tubuselemente zum Sender beziehungsweise Empfänger hin fortlaufend kleiner werden, wird so eine trichterförmige Anordnung von Tubuselementen erhalten, die besonders effizient parasitäre Lichtstrahlen so ausblendet, so dass sie nicht zum Empfänger gelangen können, beziehungsweise aus dem Sender keine parasitären Lichtstrahlen abgestrahlt werden.

Besonders vorteilhaft sind benachbarte Blenden einer Blendenanordnung über Stege verbunden.

Die Blenden mit den daran angeordneten Tubuslementen sind somit über die Stege zu einer Baueinheit verbunden, die als kompakte Einheit am Sender oder Empfänger montiert werden kann.

Vorteilhaft erstrecken sich die Stege jeweils nur über einen kleinen Bereich des Umfangs der jeweiligen Blende.

Dadurch, dass die Stege sehr schmal sind, und zudem eine kleine Anzahl von Stegen, vorteilhaft nur zwei Stege zur Verbindung zweier Blenden ausreichen, beeinträchtigen die Stege die optischen Eigenschaften der Blenden und der Tubuslemente nicht oder nicht nennenswert.

Dabei können die Stege auch nach innen oder auch ab einem bestimmten Punkt nach außen konisch verjüngt sein.

Weiterhin können sich die Querschnitte der Stege in Richtung des Senders oder Empfängers verjüngen.

Schließlich können die Querschnitte der Stege in deren Längsrichtung unterschiedlich sein.

Diese spezifischen geometrischen Ausbildungen der Stege bewirken, dass diese die optischen Eigenschaften der Blenden und Tubuslemente möglichst wenig beeinträchtigen.

Zudem ergeben sich durch die Geometrien der Stege auch fertigungstechnische Vorteile.

Gemäß einer vorteilhaften Ausführungsform bestehen die Blendenanordnung zumindest teilweise aus Kunststoff-Spritzgussteilen.

Gemäß einer ersten Variante können alle Komponenten der einzelnen Blendenanordnungen aus Kunststoff-Spritzgussteilen bestehen, wobei vorteilhaft eine Blendenanordnung aus zwei oder mehr Kunststoff-Spritzgussteilen besteht.

Gemäß einer zweiten Variante bestehen die Blenden der Blendenanordnung aus Blechteilen, wobei dann zweckmäßig die Blechteile mit lichtabsorbierenden Beschichtungen beschichtet sind.

Die Ausbildung von Komponenten der Blendenanordnung ermöglicht eine rationelle Fertigung der Blendenanordnung.

Bei beiden Varianten bestehen die Tubuslemente und insbesondere die Stege aus Kunststoff-Spritzgussteilen.

Durch die veränderlichen Querschnitte der Stege wird eine gute Entformbarkeit der Kunststoff-Spritzgussteile aus den entsprechenden Werkzeugen erzielt. Die Entformungsrichtung verläuft entlang der Längsachse, das heißt Symmetrieachse der Blendenanordnung, die im montierten Zustand entlang der optischen Achse des Senders oder Empfängers verläuft. Die variablen Querschnitte der Stege sind dann an die Entformungsrichtungen der Werkzeuge angepasst.

Vorteilhaft weist jede Blendenanordnung Befestigungsmittel zur Befestigung von Optikeinheiten auf.

Die Optikeinheiten umfassen Optikelemente wie z.B. Linsen. Weiterhin können die Optikeinheiten weitere Blendensysteme aufweisen.

Weiter vorteilhaft weisen die Stege Befestigungsmittel auf, mittels derer eine Blendenanordnung auf einer Unterlage befestigbar ist.

Zweckmäßig sind die Unterlagen von Leiterplatten gebildet auf welchen die Sender beziehungsweise Empfänger des optischen Sensors angeordnet sind.

Besonders vorteilhaft sind die Befestigungsmittel als Rast- oder Clips-Mittel ausgebildet.

Damit können die Blendenanordnung werkzeuglos an den Unterlagen, insbesondere Leiterplatten befestigt werden. Auch können die Blendenanordnungen werkzeuglos mit den Optikeinheiten verbunden werden.

Die Befestigungsmittel sind vorteilhaft Bestandteile der Kunststoff-Spritzgussteile, aus welchen die Blendenanordnungen bestehen, wodurch eine rationelle Fertigung gewährleistet ist.

Die Erfindung wird im Folgenden anhand der Zeichnungen erläutert. Es zeigen:
- Figur 1:: Ausführungsbeispiel des erfindungsgemäßen optischen Sensors in Form eines Lichtvorhangs.
- Figur 2:: Ausführungsbeispiel einer Blendenanordnung für einen Empfänger des Lichtvorhangs gemäß Figur 1.
- Figur 3:: Variante des Ausführungsbeispiels gemäß Figur 2.
- Figur 4:: Anordnung gemäß Figur 3 mit Darstellungen von Querschnitten von Stegen der Blendenanordnung.

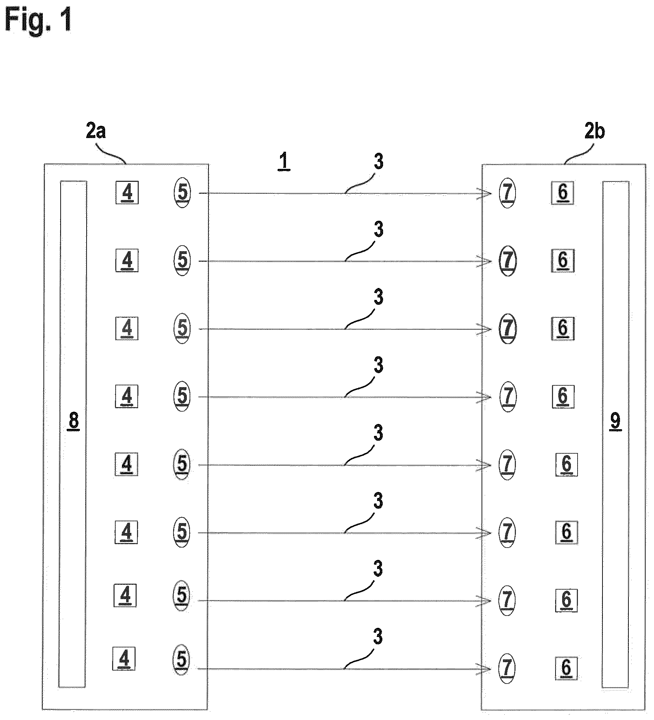

Figur 1 zeigt schematisch den Aufbau eines Ausführungsbeispiels des erfindungsgemäßen optischen Sensors in Form eines Lichtvorhangs 1 zur Erfassung von Objekten innerhalb eines Überwachungsbereichs.

Der Lichtvorhang 1 weist eine Sendereinheit mit einem Gehäuse 2a mit einer Reihenanordnung von Lichtstrahlen 3 emittierenden Sendern 4 und diesen zugeordnete Optikelemente bildenden Sendeoptiken 5 auf. Weiterhin weist der Lichtvorhang 1 eine Empfängereinheit mit einem zweiten Gehäuse 2b mit einer Reihenanordnung von Lichtstrahlen 3 empfangenden Empfängern 6 auf, welchen jeweils ein Optikelement in Form einer Empfangsoptik 7 vorgeordnet ist.

Die Gehäuse 2a, 2b sind an gegenüberliegenden Rändern des Überwachungsbereichs so angeordnet, dass jeweils ein Empfänger 6 einem Sender 4 gegenüberliegend angeordnet ist und mit diesem ein Sender-Empfänger-Paar bildet, wobei die Lichtstrahlen 3 des Senders 4 eine Strahlachse bilden. Im vorliegenden Fall sind acht Strahlachsen vorgesehen. Natürlich kann der Lichtvorhang 1 auch eine andere Zahl von Strahlachsen aufweisen.

Alternativ kann der Lichtvorhang 1 auch als Reflexions-Lichtvorhang ausgebildet sein. Dann sind alle Sender 4 und Empfänger 6 in einem Gehäuse angeordnet, welche an einem Rand des Überwachungsbereichs angeordnet ist. Am anderen Ende befindet sich ein Reflektor. Bei freiem Überwachungsbereich werden die Lichtstrahlen 3 der Sender 4 über den Reflektor zurück zum jeweils zugeordneten Empfänger 6 geführt.

Die Sender 4 werden von einer Sendersteuerung 8 gesteuert. Den Empfängern 6 ist eine Auswerteeinheit 9 zugeordnet. Dabei werden die Strahlachsen zyklisch einzeln nacheinander aktiviert. Die Auswerteeinheit 9 steuert die Empfänger 6 an und wertet deren Empfangssignale 6a zur Generierung eines Objektfeststellungssignals in Form eines binären Schaltsignals aus, dessen Schaltzustände angeben, ob sich ein Objekt im Überwachungsbereich befindet oder nicht. Bei freiem Überwachungsbereich gelangen die Lichtstrahlen 3 der Strahlachsen ungehindert zum Empfänger 6 der jeweiligen Strahlachse. Bei einem Objekteingriff wird wenigstens eine Strahlachse unterbrochen. Die Auswerteeinheit 9 kann einen mehrkanaligen Aufbau aufweisen, falls der Lichtvorhang 1 einen Sicherheitssensor bildet.

Erfindungsgemäß ist jedem Sender 4 eine Blendenanordnung 10 zugeordnet, wobei die Blendenanordnung 10 zwischen Sender 4 und Sendeoptik 5 angeordnet ist. Weiterhin ist jedem Empfänger 6 eine Blendenanordnung 10 zugeordnet, wobei diese Blendenanordnung 10 zwischen Empfänger 6 und Empfangsoptik 7 vorgesehen ist. Vorteilhaft sind alle Blendenanordnungen 10 identisch ausgebildet.

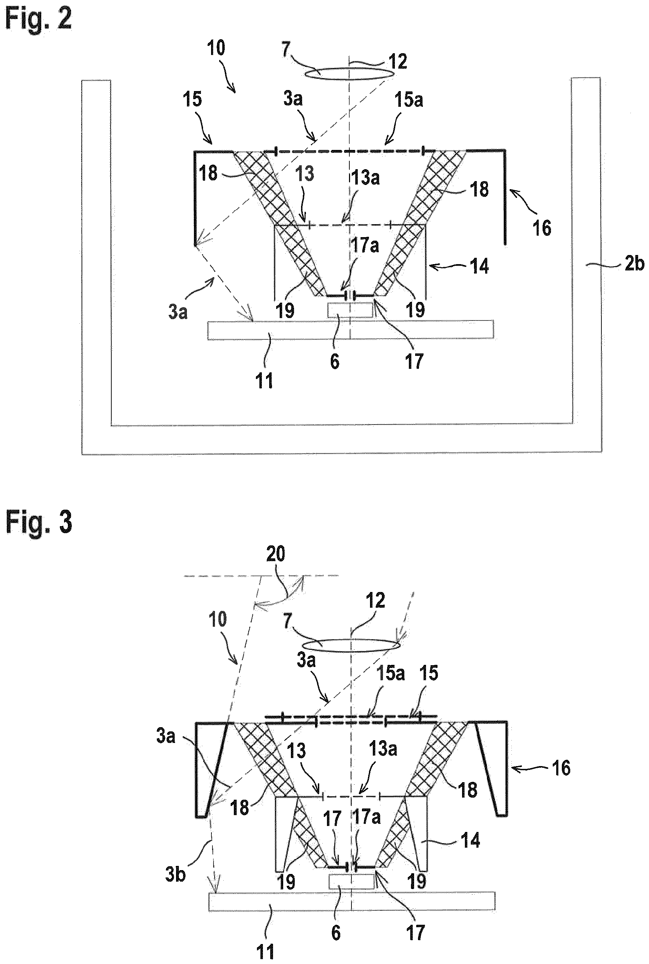

Figur 2 zeigt ein Ausführungsbeispiel einer einen Empfänger 6 zugeordneten Blendenanordnung 10. Wie Figur 2 zeigt, ist der Empfänger 6 auf einer Leiterplatte 11 angeordnet. Die Leiterplatte 11 selbst ist ortsfest im Gehäuse 2b der Empfängereinheit angeordnet. Die Leiterplatte 11 kann direkt auf dem Boden des Gehäuses aufliegend befestigt sein. Alternativ kann die Leiterplatte 11 mittels einer nicht dargestellten Halterung mit dem Gehäuse 2b verbunden sein. Figur 2 zeigt das Gehäuse 2b mit dem Boden und den von diesen senkrecht hervorstehenden Seitenwände. Die offene Frontseite ist mit einer transparenten, nicht dargestellten Scheibe abgeschlossen.

Die Blendenanordnung 10 ist symmetrisch zur optischen Achse 12 der nicht dargestellten Empfangsoptik, wobei die Blendenanordnung 10 vorzugsweise rotationssymmetrisch zur optischen Achse 12 ist.

Die Blendenanordnung 10 umfasst eine erste Blende 13 mit einem darin befestigten Tubuslement 14. Die Blende 13 weist eine zentrale Blendenöffnung 13a auf.

Daran anschließend ist eine weitere Blende 15 mit einem daran befestigten weiteren Tubuslement 16 angeordnet. Die Blende 15 weist eine zentrale Blendenöffnung 15a auf.

Schließlich ist eine dem Empfänger 6 direkt vorgeordnete dritte Blende 17 mit einer Blendenöffnung 17a vorgeordnet. Diese Blende 17 weist kein Tubuslement auf.

Die Blenden 13, 15, 17 bilden ebene Bauteile, deren Blendenebenen senkrecht zur optischen Achse 12 der Empfangsoptik 7 orientiert sind. Die Blende 17 weist die kleinste Blendenöffnung 17a und den kleinsten Außendurchmesser auf. Die Blenden 15, 13, 17 sowie die Tubuselemente 16, 14 bilden jeweils eine konische Anordnung. Vorteilhaft ist es, wenn die Blenden und Tuben die näher am Empfänger angeordnet sind, jeweils kleinere Durchmesser haben.

Jedes Tubuselement 14, 16 ist am äußeren Rand der jeweiligen Blende 13, 15 in deren Umfangsrichtung umlaufend angeordnet. Im vorliegenden Fall weisen die Tubuselemente 14, 16 konstante Wandstärken auf. Die Tubuselemente 14, 16 erstrecken sich über den gesamten Umfang der jeweiligen Blende 13, 15.

Im vorliegenden Fall sind die Wände der Tubuselemente 14, 16 senkrecht zu den Blendenebenen der Blenden 13, 15 orientiert. Dabei erstrecken sich die Tubuselemente 14, 16 ausgehend zum Rand der jeweiligen Blende 13, 15 in Richtung des Empfängers 6. Die Höhe des ersten Tubuselements 14 ist so dimensioniert, dass sich das Tubuselement 14 bis dicht vor die Leiterplatte 11 erstreckt. Die Höhe des zweiten Tubuselements 16 ist so dimensioniert, dass sich das Tubuselement 16 etwa bis zur Blendenebene der ersten Blende 13 erstreckt. Das Tubuselement dient darüber hinaus zur Abschattung von benachbarten Empfangselementen oder Sendeelementen (nicht gezeigt).

Die Blenden 13, 15 sind über zwei Stege 18 verbunden. Die Blenden 13, 17 sind ebenfalls über zwei Stege 19 verbunden.

Alle Stege 18, 19 bilden schmale Bauelemente, die sich nur über einen kleinen Winkelbereich der Blendenanordnung 10 erstrecken. Die Stege 18, 19 können sich in Richtung des Empfängers 6 verjüngen.

An den Stegen 19 können nicht dargestellte Befestigungsmittel zur Befestigung der Blendenanordnung 10 an der Leiterplatte 11 vorgesehen sein. Am anderen Ende der Blendenanordnung 10 können Befestigungsmittel zur Befestigung des Optikelements oder weiterer Komponenten einer Optikeinheit vorgesehen sein. Die Befestigungsmittel können beispielsweise in Form von Clips-Haken ausgebildet sein.

Die Komponenten der Blendenanordnung 10 bestehen vorteilhaft aus Kunststoff-Spritzgussteilen. Alternativ können die Blenden 13, 15, 17 von Blechteilen gebildet sein, wobei dann die restlichen Komponenten aus Kunststoff-Spritzgussteilen bestehen. Die Blechteile können mit lichtabsorbierenden Beschichtungen versehen sein.

Die Blenden 13, 15, 17 der Blendenanordnung 10 sorgen für eine kontrollierte Strahlführung und Strahlformung der auf den Empfänger 6 geführten Lichtstrahlen 3.

Die Tubuselemente 14, 16 sorgen für eine kontrollierte Strahlführung von schräg einfallenden Teillichtstrahlen 3a, insbesondere Nebenkeulen der Lichtstrahlen 3. Wie in Figur 2 exemplarisch dargestellt, werden Teillichtstrahlen 3a an der Innenwand des Tubuselement 16 kontrolliert so reflektiert, dass sie auf die Leiterplatte 11 geführt sind und nicht auf den Empfänger 6 treffen. Damit werden Störeinstrahlungen in den Empfänger 6 vermieden. Durch die konische Anordnung der aneinander anschließenden Tubuselemente 14, 16 ist gewährleistet, dass Teillichtstrahlen 3a in beliebigen schrägen Winkeln auf die Blendenanordnung 10 auftreffen können und diese durch die Tubuselemente immer kontrolliert so geführt werden, dass sie nicht auf den Empfänger 6 oder benachbarte Empfänger treffen, beziehungsweise Licht von benachbarten Sendern nicht auf die Sendeoptik trifft.

Figur 3 zeigt eine Variante der Ausführungsform gemäß Figur 2, wobei in Figur 3 das Gehäuse nicht gesondert dargestellt ist.

Die Ausführungsform gemäß Figur 3 unterscheidet sich von der Ausführungsform der Figur 2 dadurch, dass die Tubuselemente 14, 16 konische, sich zum Empfänger 6 hin verjüngende Wände aufweisen.

Dadurch wird die Strahlführung der schräg einfallenden Teillichtstrahlen 3a noch weiter verbessert. Da die Innenwände der Tubuselemente 14, 16 in einem Neigungswinkel (20) größer als 90° zu der Blendenebene der jeweiligen Blende 13, 15, 17 verlaufen, werden die Teillichtstrahlen 3a durch Reflexion an den Wänden der Tubuselemente noch weiter weg vom Empfänger 6 abgelenkt (3b), wie der Vergleich der Figuren 2 und 3 zeigt.

Die konisch ausgebildeten Wände der Tubuselemente 14, 16 haben auch fertigungstechnische Vorteile. Die Tubuselemente 14, 16 bestehen aus Kunststoff-Spritzgussteilen, die durch Gießen von Kunststoff in ein Werkzeug bestehend aus einem oberen und unteren Werkzeugteil hergestellt werden. Die Entformung der Kunststoff-Spritzgussteile erfolgt in einer entlang der Symmetrieachse verlaufenden Entformungseinrichtung. Durch die konisch ausgebildeten Wände der Tubuselemente 14, 16 wird diese Entformung erleichtert.

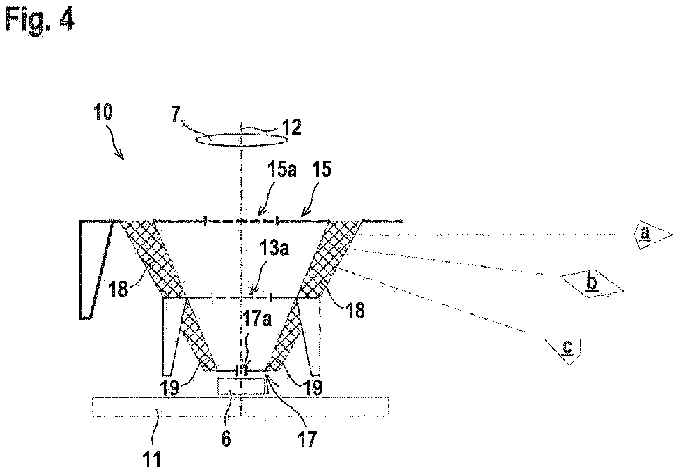

Die Entformung der Kunststoff-Spritzgussteile wird auch durch eine spezifische Formgebung der Stege 18, 19 veranschaulicht. Figur 4 zeigt die Blendenanordnung 10 gemäß Figur 3 mit einzelnen Querschnitten des Stegs18, wobei diese Querschnitte mit a, b, c bezeichnet sind. Wie in Figur 4 zeigt variiert der Querschnitt des Stegs 18, wobei diese Variation hinsichtlich einer guten Entformbarkeit der Kunststoff-Spritzgussteil optimiert ist. Steg 19 wird in gleicher Weise in seinem Querschnitt variiert.

Im Bereich von Querschnitt a wird das Werkzeugteil hauptsächlich von unten geformt, im Bereich von Querschnitt b wird das Werkzeugteil von oben und unten geformt, im Bereich von Querschnitt c wird das Werkzeugteil hauptsächlich von oben geformt.

### Bezugszeichenliste

- (1): Lichtvorhang
- (2a, b): Gehäuse
- (3): Lichtstrahl
- (3a): Teillichtstrahl
- (3b): abgelenkter Teillichtstrahl
- (4): Sender
- (5): Sendeoptik
- (6): Empfänger
- (6a): Empfangssignal
- (7): Empfangsoptik
- (8): Sendersteuerung
- (9): Auswerteeinheit
- (10): Blendenanordnung
- (11): Leiterplatte
- (12): Optische Achse
- (13): Blende
- (13a): Blendenöffnung
- (14): Tubuselement
- (15): Blende
- (15a): Blende
- (16): Tubuselement
- (17): Blende
- (17a): Blendenöffnung
- (18): Steg
- (19): Steg
- (20): Neigungswinkel
- (a): Querschnitt
- (b): Querschnitt
- (c): Querschnitt

## Patentansprüche

1. Optischer Sensor zur Erfassung von Objekten in einem Überwachungsbereich, mit wenigstens einen eine optische Achse (12) aufweisenden, Lichtstrahlen (3) emittierenden Sender (4) und mit wenigstens einen eine optische Achse (12) aufweisenden Empfänger (6), welcher zum Empfang von Lichtstrahlen (3) ausgebildet ist, **dadurch gekennzeichnet, dass** dem Sender (4) und dem Empfänger (6) jeweils eine Blendenanordnung (10) zugeordnet ist, welche wenigstens zwei entlang der optischen Achse (12) angeordnete Blenden (13, 15, 17) mit unterschiedlichen Innen- und Außendurchmessern aufweist, die über Stege (18, 19) verbunden sind.

2. Blendenanordnung nach Anspruch 1, **dadurch gekennzeichnet, dass** an wenigstens einer Blende (13, 15) ein an deren äußeren Rand umlaufendes Tubuselement (14, 16) vorgesehen ist.

3. Optischer Sensor nach Anspruch 1, **dadurch gekennzeichnet, dass** jede Blende (13, 15) ein Tubuselement (14, 16) aufweist.

4. Optischer Sensor nach einem der Ansprüche 1 bis 3, **dadurch gekennzeichnet, dass** das oder jedes Tubuselement (14, 16) an der dem Sender (4) oder Empfänger (6) zugewandten Seite der jeweiligen Blende (13, 15) vorgesehen ist.

5. Optischer Sensor nach einem der Ansprüche 1 - 4, **dadurch gekennzeichnet, dass** jedes Tubuselement (14, 16) entlang des gesamten Umfangs der jeweiligen Blende (13, 15) umläuft.

6. Optischer Sensor nach einem der Ansprüche 1 - 5, **dadurch gekennzeichnet, dass** Tubuselemente (14, 16) in einem konstanten Neigungswinkel zu einer Blendenebene der Blende (13, 15) an dieser umläuft.

7. Optischer Sensor nach Anspruch 6, **dadurch gekennzeichnet, dass** der Neigungswinkel wenigstens 85° beträgt.

8. Optischer Sensor nach Anspruch 6, **dadurch gekennzeichnet, dass** der Neigungswinkel wenigstens 90° beträgt.

9. Optischer Sensor nach einem der Ansprüche 1 - 8, **dadurch gekennzeichnet, dass** die dem Sender (4) oder Empfänger (6) nächstliegende Blende (13, 15, 17) der kleinsten Innen- und Außendurchmesser aufweist, und dass die Innen- und Außendurchmesser der folgenden Blenden (13, 15, 17) jeweils größer sind als der Innen- und Außendurchmesser der benachbarten, näher zum Sender (4) oder Empfänger (6) liegenden Blende (13, 15, 17).

10. Optischer Sensor nach einem der Ansprüche 1 - 9, **dadurch gekennzeichnet, dass** sich die Stege (18, 19) jeweils über einen kleinen Bereich des Umfangs der jeweiligen Blende (13, 15, 17) erstrecken.

11. Optischer Sensor nach einem der Ansprüche 1 - 10, **dadurch gekennzeichnet, dass** die Stege (18, 19) nach innen und/oder außen konisch verjüngt sind.

12. Optischer Sensor nach einem der Ansprüche 1 - 11, **dadurch gekennzeichnet, dass** sich die Querschnitte der Stege (18, 19) in Richtung des Senders (4) oder Empfängers (6) verjüngen.

13. Optischer Sensor nach einem der Ansprüche 1 - 11, **dadurch gekennzeichnet, dass** die Querschnitte der Stege (18, 19) in deren Längsrichtung unterschiedlich sind.

14. Optischer Sensor nach einem der Ansprüche 1 - 13, **dadurch gekennzeichnet, dass** die Blendenanordnung (10) Befestigungsmittel zur Befestigung von Optikeinheiten aufweist.

15. Optischer Sensor nach einem der Ansprüche 1 - 14, **dadurch gekennzeichnet, dass** die Stege (18, 19) Befestigungsmittel aufweisen, mittels derer eine Blendenanordnung (10) auf einer Unterlage befestigbar ist.

16. Optischer Sensor nach einem der Ansprüche 14 oder 15, **dadurch gekennzeichnet, dass** die Befestigungsmittel als Rast- oder Clips-Mittel ausgebildet sind.

17. Optischer Sensor nach einem der Ansprüche 15 oder 16, **dadurch gekennzeichnet, dass** der Sender (4) und/oder Empfänger (6) auf einer Leiterplatte (11) angeordnet ist, welche die Unterlage bildet.

18. Optischer Sensor nach einem der Ansprüche 1 - 17, **dadurch gekennzeichnet, dass** die Blendenanordnung (10) zumindest teilweise aus Kunststoff-Spritzgussteilen besteht.

19. Optischer Sensor nach Anspruch 18, **dadurch gekennzeichnet, dass** die Blenden (13, 15, 17) der Blendenanordnung (10) aus Blechteilen bestehen.

20. Optischer Sensor nach Anspruch 19, **dadurch gekennzeichnet, dass** die Blechteile mit lichtabsorbierten Beschichtungen beschichtet sind.

21. Optischer Sensor nach einem der Ansprüche 1 - 20, **dadurch gekennzeichnet, dass** dieser ein Sicherheitssensor ist.
